# EUROPEAN PATENT APPLICATION

(11) **EP 2 537 989 A1**
(43) Date of publication of application: **26.12.2012**
(21) Application number: 11170830.1
(22) Date of filing: 21.06.2011
(51) Int. Cl.: E02F 9/22

(54) **Hydraulic system for providing auxiliary drive to a powertrain and a hydraulic circuit**

(71) Applicant: Caterpillar, Inc., Peoria, IL 61629 (US)
(72) Inventor: Smith, Andrew John, Derbyshire DE6 1ED (GB); Harper, Robert Nicholas, Derbyshire DE73 8DA (GB)
(74) Representative: Bucks, Teresa Anne

(57) **Abstract**

This disclosure is directed towards a hydraulic system for providing auxiliary drive to a powertrain (11) and a hydraulic circuit (12) by storing and releasing hydraulic fluid using an accumulator (29). A hydraulic drive system (10) comprises an engine (14), a hydraulic machine (22) operably connected to the engine (14), a pump (17), an accumulator (29) and at least one valve (20, 27). The pump (17) is driven by the engine (14) and is configured to control a hydraulic circuit (12). The accumulator (29) is fluidly connected to the hydraulic circuit (21) and the hydraulic machine (22). In one instance, the at least one valve (20, 27) is operable to direct pressurised fluid from at least one of the hydraulic machine (22) and the pump (17) to charge the accumulator (29). Alternatively, the at least one valve (20, 27) is operable to direct pressurised fluid from the accumulator (29) to at least one of the hydraulic machine (22) and the hydraulic circuit (21).

## Description

### Technical Field

This disclosure is directed towards a hydraulic system for providing auxiliary drive to a powertrain and a hydraulic circuit by storing and releasing hydraulic fluid using an accumulator.

### Background

The use of lower power engines in vehicles may be advantageous as they can improve efficiency and lower emissions. However, vehicles with low power engines, particularly work machines used in industry or construction and the like, may at times not be capable of providing sufficient power to the main vehicle drive or to hydraulically operated machinery powered by the main vehicle drive. Examples of such work machines include backhoe loaders, track loaders, front shovels, excavators and wheel loaders. One method of compensating for this is to incorporate energy storage means in the vehicle and to provide the stored energy to the powertrain at times of power deficit.

An exemplary power train on a vehicle primarily consists of an engine, a clutch, a transmission, a drive shaft and a set of wheels. In a vehicle featuring such a powertrain it is common to use hydraulic fluid as a means of energy storage. Typically, excess power from the powertrain, for example the power output of the powertrain during braking, is used to pump hydraulic fluid into, or charge, an accumulator. When extra power is required by the powertrain the hydraulic fluid may be released from the accumulator and used to drive a motor connected to, and thereby provide supplemental power to, the powertrain.

A variable displacement pump may be used in such a hydraulic energy storage system as it can act as both a pump and motor. The variable displacement pump may be connected to an engine driven shaft, or power take-off (PTO), which is typically mounted on the transmission of the power train. This arrangement enables rotational kinetic energy from the engine to be transferred to kinetic energy in the hydraulic fluid and vice-versa. A further clutch may be provided in between the variable displacement pump and PTO such that the hydraulic energy storage system can be engaged and disengaged from the transmission.

One potential disadvantage in using a transmission mounted PTO occurs when the variable displacement pump is only able to charge the accumulator if the transmission is engaged with the engine and therefore if the vehicle is moving. This may apply to work machines which must direct power from the engine to hydraulically operated machinery when the work machine is stationary. An alternative arrangement, which also avoids any potential frictional or other energy losses in the transmission, is one in which the variable displacement pump is connected to a 'live' PTO directly mounted on the engine.

An example of a hydraulic energy storage system directly connected to an engine is disclosed in the document US-B-7,273,122. The drive system includes an engine, a transmission and a hydraulic energy storage system. The hydraulic energy storage system comprises a hydraulic accumulator connected via a conduit to one side of a reversible hydraulic machine and a hydraulic reservoir connected via a conduit to the other side of the reversible hydraulic machine. The reversible hydraulic machine is coupled to a 'live' PTO directly connected to an output shaft of the engine. During a retarding mode, the reversible hydraulic machine pumps hydraulic fluid from the hydraulic reservoir into the accumulator. As power is drawn from the engine to drive the reversible hydraulic machine this mode also acts as a brake upon the engine. During a driving mode the hydraulic fluid is released from the accumulator and drives the reversible hydraulic machine, which acts as a motor and thus provides supplemental drive power to the engine. During a neutral mode a coupling device, such as a clutch, is used to disconnect the output shaft of the engine from the reversible hydraulic machine. All three modes can be engaged whilst the vehicle is stationary, thereby enabling the storage system to aid engine starting, generating auxiliary hydraulic power and pre-charging of energy storage accumulators.

US-B-7,273,122 does not, however, provide an efficient apparatus for using the hydraulic energy storage system on work machines which incorporate a hydraulic system which is driven by the powertrain. Additionally, US-B-7,273,122 does not disclose a method for directing hydraulic fluid to the accumulator when the engine is not in a retarding mode.

### Summary

According to one aspect of the present disclosure there is provided a hydraulic drive system comprising: an engine; a hydraulic machine operably connected to the engine; a pump which is driven by the engine and is configured to control a hydraulic circuit; an accumulator fluidly connected to the hydraulic circuit and to the hydraulic machine; and at least one valve operable to direct pressurised fluid from at least one of the hydraulic machine and the pump to charge the accumulator or to direct pressurised fluid from the accumulator to at least one of the hydraulic machine and the hydraulic circuit.

The disclosure further provides a method of operating a hydraulic drive system comprising; controlling at least one valve to direct hydraulic fluid from a hydraulic circuit to an accumulator or to direct hydraulic fluid from the accumulator to the hydraulic circuit; controlling at least one valve to direct hydraulic fluid from a hydraulic machine to the accumulator or to direct hydraulic fluid from the accumulator to the hydraulic machine; wherein the hydraulic fluid is directed around the hydraulic circuit by a pump driven by an engine and the hydraulic machine is operably connected to the engine.

By way of example only, embodiments of a hydraulic system for providing auxiliary drive to a powertrain and a hydraulic circuit are now described with reference to, and as shown in, the accompanying drawings.

### Brief Description of the Drawings

Figure 1 is a schematic representation of one embodiment of the apparatus of this disclosure; and
Figure 2 is a graphical illustration of an exemplary relationship between the brake specific fuel consumption and speed of an internal combustion engine.

### Detailed description

The present disclosure is generally directed towards a hydraulic control system for a work machine. Hydraulic fluid is stored in an accumulator and, when released, provides driving power to an engine or to a hydraulic circuit which controls hydraulic machinery.

A work machine typically comprises a powertrain to provide power to driving wheels or tracks and a hydraulic circuit for controlling the position and movement of a work tool. In the present disclosure the work machine may be of any type, some examples of which are backhoe loaders, track loaders, front shovels, bulldozers and wheel loaders. The work tool typically comprises one or more booms, arms or sticks to which at least one work implement is attached. In the present disclosure the work implement may be of any type, some examples of which are buckets, shovels, grapples, hammers, felling heads, shears, saws, forks, augurs or material handling arms.

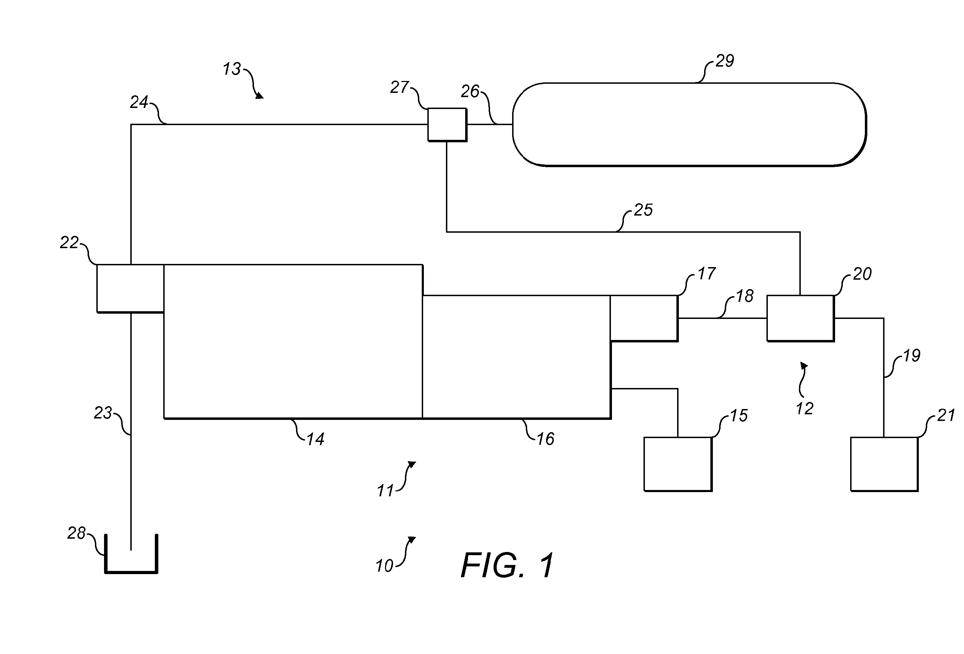

Figure 1 illustrates an embodiment of a hydraulic drive system 10 comprising a powertrain 11, a hydraulic circuit 12 and a hydraulic energy storage circuit 13. The powertrain 11 may direct power from an engine 14 to a driveline 15 via a transmission 16. The driveline 15 may connect the transmission 16, and therefore direct power from the engine 14, to the driving wheels or tracks of the work machine using, for example, driveshafts and differentials. The engine may be of any type, such as, for example, an internal combustion engine, a micro turbine or an electrically driven motor.

The hydraulic circuit 12 may comprise a pump 17, two hydraulic fluid conduits 18, 19, a valve 20 and a work tool hydraulic circuit 21. The pump 17 may be operably connected to the transmission 16 and may direct pressurised hydraulic fluid from a reservoir (not shown) to the valve 20 via the conduit 18. The pump 17 may, therefore, receive power from and be driven by the engine 14. The pump 17 may be a variable displacement pump, examples of which include an axial piston pump, a radial piston pump and a bent axis pump. The pump 17 may comprise an input shaft and a variable device, such as a swashplate, which controls the flow rate of hydraulic fluid through the pump 17. The variable device may be controlled by an Electronic Control Unit (ECU). The variable device may be adjustable such that the input shaft may rotate but the pump 17 does not displace any hydraulic fluid in the hydraulic circuit 12. The input shaft of the pump 17 may be operably connected to an output shaft of the transmission 16. The operable connection may be via engaged splines on the input shaft and output shaft.

The valve 20 may direct hydraulic fluid to the work tool hydraulic circuit 21 via the conduit 19. In Figure 1 the hydraulic circuit 12 shown forms an open circuit. However, it may form a closed circuit or elements of the work tool hydraulic circuit 21 may form a closed circuit. The work tool hydraulic circuit 21 may be used to control the position and movement of at least one work tool using one or more actuators. The work tool hydraulic circuit 21 may also comprise actuators which operate the functions of the work implement, such as, for example, the closing of the blades of shears or the grabber arms of a felling head.

A torque converter or clutch may be located in between the engine 14 and the transmission 16 to enable the transmission 16 and the engine 14 to be disengaged from one another. This would enable the engine 14 to operate, but not provide power to either the pump 17 or the driveline 15. The transmission 16 may enable the pump 17 and driveline 15 to be driven at different torques or angular velocities to the output of the engine 14. The transmission 16 may also enable the pump 17 and driveline 15 to each be driven at different angular velocities or torques to one another.

Clutches or torque converters may be located in between the transmission 16 and the pump 17 and/or in between the transmission 16 and the driveline 15. This provides for the driving of neither of, one of, or both of the pump 17 and driveline 15 by the engine 14 via the transmission 16. In particular, the provision of a clutch or torque converter in between the transmission 16 and the driveline 15 enables the pump 17 to be driven, and, therefore, the work tool hydraulic circuit 21 to be operated, whilst the work machine is not moving.

The hydraulic energy storage circuit 13 may comprise a hydraulic machine 22, four hydraulic fluid conduits 23, 24, 25, 26, a valve 27, a hydraulic reservoir 28 and an accumulator 29. The hydraulic machine 22 may be operably connected to the engine 14 and fluidly connected to the hydraulic reservoir 28 by the conduit 23, along which hydraulic fluid may travel in either direction. The hydraulic machine 22 and the valve 27 may be fluidly connected by the conduit 24 and the valve 27 may be fluidly connected to the valve 20 by the conduit 25. The accumulator 29 for storing hydraulic fluid may also be fluidly connected to the valve 27 via the conduit 26. The valve 27 may direct hydraulic fluid to or from the accumulator 29, to or from the hydraulic machine 22 or to or from the valve 20. The valve 27 may ensure that the pressurised hydraulic fluid remains in the accumulator 29 until released and may be integrated with the inlet/outlet of the accumulator 29 such that they form a single component part and conduit 26 is not necessary. The valves 27, 20 may be combined in a single valve.

The hydraulic reservoir 28 may be the same reservoir that supplies hydraulic fluid to the pump 17 and the work tool hydraulic circuit 21 (connection not shown in Figure 1). The hydraulic machine 22 may be operably connected to the engine 14 directly via a driveshaft or a Power Take Off (PTO). A torque converter or a clutch may be disposed in between the hydraulic machine 22 and the engine 14 to enable their disengagement. The hydraulic machine 22 may be a variable displacement pump comprising a swashplate which may be adjusted to an angle which prevents the hydraulic machine 22 from displacing the hydraulic fluid in the conduits 23, 24. The hydraulic machine 22 may, therefore, be driven by the engine 14 but not increase the hydraulic fluid pressure in conduit 24, and hydraulic fluid may flow from the conduit 24 to the conduit 23 via the hydraulic machine 22 but not cause the hydraulic machine 22 to drive the engine 14.

During operation of the hydraulic drive system 10 a controller (not shown) may control the operation of the powertrain 11, the hydraulic circuit 12 and the hydraulic energy recovery circuit 13. The controller may be an ECU.

When the pump 17 is driven by the engine 14 via the transmission 16 hydraulic fluid may be directed via the valves 20, 27 into the accumulator 29 and thereby the accumulator 29 is charged. The hydraulic fluid may be directed via the valve 20 to the work tool hydraulic circuit 21 to control the actuators attached to the work tool.

Hydraulic fluid may be released from the accumulator 29 and directed via the valves 27, 20 to the work tool hydraulic circuit 21 in addition to the hydraulic fluid directed to the work tool hydraulic circuit 21 by the pump 17. The additional hydraulic fluid supplied to the work tool hydraulic circuit 21 may provide increased hydraulic fluid pressure, in addition to the hydraulic fluid pressure supplied by the pump 17, to the actuators controlling the work tool and thereby the actuators apply an increased force, or increased power, to the work tool. The hydraulic fluid may also be incrementally released from the accumulator 29 to compensate for any fluctuations in the output of the pump 17 and therefore ensure that a steady flow of hydraulic fluid is supplied to the work tool hydraulic circuit 21.

The hydraulic fluid may be directed from the accumulator 29 via the valves 27, 20 to the work tool hydraulic circuit 21 when the pump 17 is not being driven by the engine 14, for example when the engine 14 is not operational, the transmission 16 is disengaged from the engine 14 or when the pump 17 is disengaged from the transmission 16. As a result, the components of the work tool hydraulic circuit 21, such as the actuators controlling the work tool, may be operated whilst the pump 17 is not running and particularly when the engine 14 is not running.

In one embodiment the hydraulic machine 22 is a pump driven by the engine 14 which directs hydraulic fluid from the reservoir 28 to the accumulator 29 via the valve 27. When the engine 14 is running and the hydraulic machine 22 engaged, hydraulic fluid may be drawn from the hydraulic reservoir 28 and directed via the valve 27 into the accumulator 29. Alternatively, the hydraulic machine 22 may direct hydraulic fluid from the hydraulic reservoir 28 to the work tool hydraulic circuit 21 via the valves 27, 20. The hydraulic fluid supplied to the work tool hydraulic circuit 21 by the hydraulic machine 22 may be supplemental to the hydraulic fluid supplied to the work tool hydraulic circuit 21 by the pump 17. The work tool hydraulic circuit 21 may, therefore, be operated when the pump 17 is disengaged or has failed.

In another embodiment the hydraulic machine 22 is a motor driven by the transfer of hydraulic fluid from the accumulator 29 to the hydraulic reservoir 28. The output of the motor is used to drive the driveshaft or PTO of, and, therefore, supply supplemental power to, the engine 14. This supplemental power may be used to drive the pump 17 and/or the driveline 15 via the transmission 16. The supplemental power provided by the output of the motor may be used to start the engine 14.

In a further embodiment the hydraulic machine 22 is a reversible hydraulic machine, such as a variable displacement pump, which may act as either a pump or a motor. The reversible hydraulic machine may behave as a pump as previously described herein; when driven by the engine 14 hydraulic fluid is transferred from the hydraulic reservoir 28 to the accumulator 29 or to the work tool hydraulic circuit 21. The reversible hydraulic machine may also behave as a motor as previously described herein; when driven by the transfer of hydraulic fluid from the accumulator 29 to the hydraulic reservoir 28 and acting as a motor, supplemental power is provided to the engine 14.

During operation of the hydraulic drive system 10 hydraulic fluid may be directed to the accumulator 29 in a charging mode. The charging mode may be enabled when the power output requirements of the engine 14 are low, for example when the work machine is stationary and/or the work tool hydraulic circuit 21 is not operational. The hydraulic fluid may be directed from the pump 17 to the accumulator 29. If the hydraulic machine 22 is a pump or is reversible, hydraulic fluid may be directed to the accumulator 29 either independently of or in addition to hydraulic fluid directed by the pump 17.

During operation of the hydraulic drive system 10 hydraulic fluid may be released from the accumulator 29 in a driving mode. The driving mode may be engaged when the power output requirements of the engine 14 are high, for example when the work machine is moving, during which power is drawn through the driveline 15, and/or when the work tool hydraulic circuit 21 is operational. If the hydraulic machine 22 is a motor or is reversible, the release of hydraulic fluid may be directed to the hydraulic machine 22 and used to provide supplemental power to the engine 14, which provides power to the pump 17 and/or the driveline 15. The release of hydraulic fluid may be directed, in addition or alternatively to being directed to the hydraulic machine, to the hydraulic circuit 12 to either supplement the hydraulic fluid pressure generated in the work tool hydraulic circuit 21 by the pump 17 or to drive the work tool hydraulic circuit 21 whilst the pump 17 is not operational.

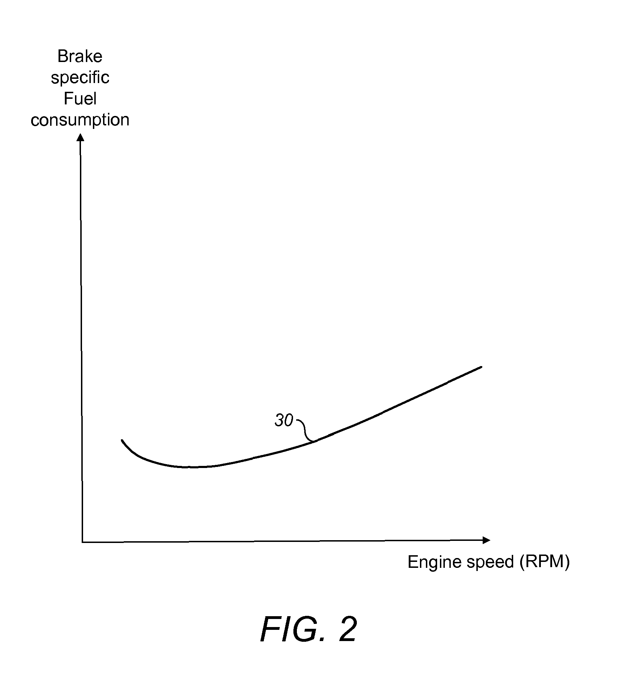

In one embodiment in which the engine 14 is an internal combustion engine, a method of controlling the hydraulic drive system 10 may utilise the brake specific fuel consumption (BSFC), the engine 14 speed, the output torque and the maximum available output torque of the engine 14. In Figure 2 the BSFC, representing the fuel consumed per unit of power output of the engine 14, is shown by the vertical axis. The horizontal axis represents the engine 14 speed, or revolutions per minute (RPM) of the crankshaft in the engine 14. The relationship between the BSFC and engine 14 speed is illustrated by a curve 30. The curve 30 is exemplary as the shape of the curve 30 may vary according to the engine 14 type, the engine 14 characteristics or the air to fuel ratio inside the combustion chambers of the engine 14.

When the engine 14 is at a constant air to fuel ratio, a level of BSFC on the curve 30 may be achieved by manipulating either the engine speed or torque. This is a result of the power output of the engine 14 being proportional to the product of the engine 14 speed and torque. As is illustrated by the curve 30, the BSFC may be at a minimum at a particular engine 14 speed (and therefore at a particular output torque). In this embodiment the engine 14 torque may be controlled to achieve the minimum BSFC when hydraulic fluid is directed towards the accumulator 29.

The air to fuel ratio may be measured in the engine 14 by means that are already known in the art, for example by estimating the air supply from the angle of the throttle plate in the throttle or from engine mapping data for an electronically controlled engine. The minimum BSFC and the corresponding output torque at the minimum BSFC may be estimated for the measured air to fuel ratio. The actual output torque of the engine 14 may also be measured using methods and apparatus that are already known to those skilled in the art. If the measured output torque is lower than the estimated output torque at the minimum BSFC a charging mode may be engaged by the controller. The engine 14 may drive the pump 17 and/or the hydraulic machine 22 to direct hydraulic fluid into the accumulator 29. The engine 14 may be driven at a measured output torque equal to, or within a predetermined range of, the estimated output torque at the minimum BSFC. The charging mode may be disengaged when either the accumulator 29 is full or the measured output torque rises outside of a predetermined range of the estimated output torque at the minimum BSFC.

The maximum output torque of the engine 14 may also be measured using methods and apparatus that are already known to those skilled in the art. If the measured output torque is within a predetermined range of the maximum output torque a driving mode may be engaged by the controller. The hydraulic fluid may be released from the accumulator 29 to drive the hydraulic machine 22 as a motor and/or to provide supplemental hydraulic fluid to the work tool hydraulic circuit 21. The predetermined range may be of any value, for example the hydraulic fluid may be released from the accumulator 29 if the value of the measured output torque is at a value of 98% of the maximum output torque or above.

Further control of the features of the powertrain 11 and hydraulic energy storage circuit 13 may also be required for any type of engine 14. One such control feature may include disabling the charging mode if the accumulator 29 is close to its full hydraulic fluid capacity. Another control feature may involve disabling the driving mode when the accumulator 29 contains no hydraulic fluid.

The charging mode may also be engaged during braking of the work machine. When a brake on the work machine is applied, for example to a set of wheels, the power from the engine 14 may be directed to the pump 17 or the hydraulic machine 22. The withdrawal of this power may also act as a brake on the engine 14.

The charging mode may also be engaged when the engine 14 overruns, such as, for example, when a demand is made by the operator for a reduction in the power output of the engine 14. The power output of the engine 14 may not follow the demand exactly and the actual reduction in power output may be slower than the demanded reduction in power output. The excess power output that results may be used to provide power to either the pump 17 or the hydraulic machine 22.

In an embodiment the hydraulic machine 22 is a motor. During the charging mode, which may be engaged as described previously herein, the pump 17 may direct hydraulic fluid to the accumulator 29 via the conduits 18, 25, 26 and the valves 20, 27. During the driving mode, which may be engaged as described previously herein, hydraulic fluid may be directed from the accumulator 29 to the hydraulic machine 22, which is a motor, via the conduits 26, 24 and the valve 27. The hydraulic fluid may drive the motor and may be directed to the hydraulic reservoir 28 via the conduit 23. The motor may drive a driveshaft or PTO and thereby supply supplemental power to the engine 14. The engine 14 may therefore provide extra power to the hydraulic circuit 12 or the driveline 15 on demand.

### Industrial Applicability

The disclosed hydraulic system for providing auxiliary drive to a powertrain 11 and a work tool hydraulic circuit 21 may be used in a wide range of work machines.

The work tool hydraulic circuit 21 may be operated whilst the work machine is stationary and the driveline 15 is disengaged from the engine 14 by directing hydraulic fluid from the pump 17 and/or the accumulator 29 to the work tool hydraulic circuit 21. Hydraulic fluid may also be directed to the accumulator 29 from the hydraulic machine 22 or pump 17 whilst the work machine is stationary and the driveline 15 is disengaged from the engine 14. The work tool hydraulic circuit 21 may also be operated when the pump 17 is disengaged from the engine 14 by directing hydraulic fluid from the accumulator 29 and/or the hydraulic machine 22 to the work tool hydraulic circuit 21. Supplemental power may be supplied by the hydraulic machine 22 to the engine 14 during the release of hydraulic fluid from the accumulator 29.

In addition, the efficiency of the hydraulic energy storage circuit may be improved in contrast to previous systems since the power transfer from the engine 14 to the work tool hydraulic circuit 21 may bypass the transmission 16. For example, the hydraulic machine 22 may pump hydraulic fluid into the accumulator 29 and the hydraulic fluid may be later released into the work tool hydraulic circuit 21; thereby any losses resulting from transferring power to the work tool hydraulic circuit 21 via the transmission 16 and pump 17 may be avoided.

## Claims

1. A hydraulic drive system (10) comprising:
an engine (14);
a hydraulic machine (22) operably connected to the engine (14);
a pump (17) which is driven by the engine (14) and is configured to control a hydraulic circuit (12);
an accumulator (29) fluidly connected to the hydraulic circuit (12) and to the hydraulic machine (22); and
at least one valve (27, 20) operable to direct pressurised fluid from at least one of the hydraulic machine (22) and the pump (17) to charge the accumulator or to direct pressurised fluid from the accumulator (29) to at least one of the hydraulic machine (22) and the hydraulic circuit (12).

2. The hydraulic drive system (10) as claimed in claim 1 wherein the hydraulic machine (22) is operably connected to the engine (14) via a driveshaft.

3. The hydraulic drive system (10) as claimed in claim 1 or claim 2 wherein the hydraulic machine (22) is a motor and the release of the pressurised fluid from the accumulator (29) drives the motor to provide supplemental drive power to the engine (14).

4. The hydraulic drive system (10) as claimed in claim 1 or claim 2 wherein the hydraulic machine (22) is a pump connected to a supply of hydraulic fluid and is driven by the engine (14) to charge the accumulator (29).

5. The hydraulic drive system (10) as claimed in claim 1 or claim 2 wherein the hydraulic machine (22) is reversible.

6. The hydraulic drive system (10) as claimed in claim 5 wherein;
the reversible hydraulic machine is used to pump hydraulic fluid to the accumulator (29) when in a charging mode; and
the reversible hydraulic machine is used to drive the engine (14) when hydraulic fluid is released from the accumulator (29) when in a driving mode.

7. The hydraulic drive system (10) as claimed in claim 5 or claim 6 wherein the reversible hydraulic machine is a variable displacement pump.

8. The hydraulic drive system (10) as claimed in any one of the preceding claims wherein the accumulator (29) is charged by the action of the pump (17) in the hydraulic circuit (12).

9. The hydraulic drive system (10) as claimed in any one of the preceding claims wherein the pump (17) is driven by the engine (14) via a transmission (16).

10. The hydraulic drive system (10) as claimed in claim 9 wherein the transmission (16) also drives a driveline (15).

11. The hydraulic drive system (10) as claimed in claim 10 wherein the transmission (16) is operable such that only the pump (17) is driven by the engine (14), only the driveline (15) is driven by the engine (14) or both the pump (17) and the driveline (15) are driven by the engine (14).

12. A method of operating a hydraulic drive system (10) comprising;
controlling at least one valve (20, 27) to direct hydraulic fluid from a hydraulic circuit (12) to an accumulator (29) or to direct hydraulic fluid from the accumulator (29) to the hydraulic circuit (12);
controlling at least one valve (27) to direct hydraulic fluid from a hydraulic machine (22) to the accumulator (29) or to direct hydraulic fluid from the accumulator (29) to the hydraulic machine (22);
wherein the hydraulic fluid is directed around the hydraulic circuit (12) by a pump (17) driven by an engine (14) and the hydraulic machine (22) is operably connected to the engine (14).

13. The method as claimed in claim 12 wherein the engine (14) is an internal combustion engine and hydraulic fluid is directed to the accumulator (29) when the engine (14) output torque is lower than the engine (14) output torque at which the brake specific fuel consumption of the engine (14) is at a minimum.

14. The method as claimed in claim 12 or claim 13 wherein the engine (14) is an internal combustion engine and hydraulic fluid is directed from the accumulator (29) to drive the hydraulic machine (22) or is directed to the hydraulic circuit (12) when the engine (14) output torque is within a predefined range close to the maximum engine (14) output torque.

15. The method as claimed in claims 12 to 14 wherein the hydraulic machine (22) is a motor.
